# DEMANDE DE BREVET EUROPEEN

(11) **EP 0 581 653 A1**
(43) Date de publication de la demande: **02.02.1994**
(21) Numéro de dépôt: 93401915.9
(22) Date de dépôt: 23.07.1993
(51) Int. Cl.: C08J 7/04, C09D 175/04, C08G 18/16, G02B 1/10, C08L 33/12

(54) **Procédé pour modifier en surface les propriétés optiques d'une pièce en polyméthacrylate de méthyle**

(30) Priorité: 28.07.1992 FR 9209287
(71) Demandeur: Malinvaud, Eric, F-87000 Limoges (FR); Merour, Pierre, F-87000 Limoges (FR)
(72) Inventeur: Malinvaud, Eric, F-87000 Limoges (FR); Merour, Pierre, F-87000 Limoges (FR)
(74) Mandataire: CABINET BONNET-THIRION

(57) **Abrégé**

Le procédé consiste à appliquer sur un substrat un revêtement constitué par un polymère susceptible de se greffer sur le substrat, un vernis acrylique, un catalyseur de greffage et un solvant agressif vis à vis du substrat, le catalyseur de greffage étant ajouté juste avant l'application du revêtement sur le substrat.

Le polymère est un polyuréthanne apporté sous forme de vernis. Le revêtement peut être additionné de pigments organiques. On peut appliquer une ou plusieurs couches. Après séchage le matériau présente un effet de dépoli très fin, peu diffusant et un aspect granité au touché ainsi qu'un caractère hydrophobe indélébile protégeant contre les salissures des doigts.

Applications notamment dans le domaine de la décoration.

## Description

La présente invention concerne un procédé pour modifier en surface les propriétés optiques d'une pièce en polyméthacrylate de méthyle, notamment pour lui conférer un aspect de verre dépoli. L'invention trouve plus particulièrement son application dans le domaine de la décoration où l'on cherche des procédés simples pour modifier l'aspect des matériaux ainsi que leur couleur.

Le polyméthacrylate de méthyle est bien connu pour deux propriétés assez spectaculaires, sa transparence et sa limpidité qui sont comparables à celle du cristal et sa remarquable tenue au temps. Ces propriétés rendent ce matériau particulièrement attrayant. Les applications sont diverses, on l'utilise notamment pour les enseignes, pour les objets décoratifs et les petits meubles, notamment aussi pour la facilité de mise en oeuvre par thermoformage avec des outillages à faible coût.

D'une manière générale, pour conférer des propriétés optiques particulières à ce type de matériau, la technique classique consisterait à modifier sa composition, en y ajoutant des composants et des stabilisateurs, le matériau obtenu après polymérisation étant modifié dans sa masse et constituant en fait un nouveau matériau. Dans le domaine de la décoration, c'est une technique qui manque de souplesse. Il faut en effet prévoir la décoration dès la conception des pièces.

La présente invention propose un procédé dont la mise en oeuvre est plus simple, qui consiste, non pas à modifierle matériau dans sa masse, mais à modifier ses caractéristiques physico-chimiques en surface en appliquant un revêtement choisi susceptible d'interagir avec le polyméthacrylate de méthyle.

Grâce à cette technique il devient possible de modifier les propriétés optiques localement et de manière précise à la surface d'un objet en polyméthacrylate de méthyle.

Selon l'invention, il est proposé un procédé pour modifier les propriétés optiques d'un substrat en polyméthacrylate de méthyle, caractérisé en ce que l'on applique sur le substrat un revêtement constitué par un polymère susceptible de se greffer sur le substrat, un vernis acrylique, un catalyseur de greffage et un solvant agressif vis à vis du substrat, le catalyseur de greffage étant ajouté juste avant l'application du revêtement sur le substrat.

Le solvant est choisi parmi les solvants connus pour être suffisamment agressifs pour dissoudre le méthacrylate de méthyle, par exemple des hydrocarbures chlorés, des hydrocarbures aromatiques ou des aldéhydes ou cétones. En l'espèce des solvants utilisés couramment comme diluants de vernis acrylique. On crée par cette attaque, à l'interface entre le méthacrylate de méthyle et le revêtement, des sites de greffage par polymérisation du polymère contenu dans le revêtement appliqué, de préférence un polyuréthanne apporté sous forme de vernis. Cette polymérisation est amorcée par le catalyseur contenu dans le revêtement et terminée lorsque le solvant est évaporé.

Après séchage, le matériau présente un effet optique nouveau, de dépoli très fin peu diffusant et un aspect granité au touché. Il est de plus hydrophobe, ce qui constitue un avantage technique particulièrement intéressant car permet de protéger le matériau contre les salissures des doigts. De plus encore, cet aspect résultant de modifications physicochimiques, l'aspect obtenu est indélébile.

A la composition du revêtement, il est possible aussi d'ajouter des pigments organiques, l'effet combiné du verre dépoli et de la couleur confère au matériau une apparence originale.

Selon d'autres caractéristiques, on peut procéder à la réalisation de plusieurs couches successives, à la condition, pour que le greffage soit efficace, que du solvant provenant de la couche précédente soit encore présent à l'interface.

Le dépôt du revêtement est réalisé selon les techniques classiques, par exemple à l'aide d'un pistolet, d'un pinceau ou par trempage.

La présente invention sera mieux comprise à la lumière de la description qui va suivre d'un exemple de réalisation.

Le procédé est mis en oeuvre sur une pièce cylindrique de 25 mm de diamètre et 70 cm de hauteur, constituant un pied de table.

On procède à la préparation du revêtement, juste avant son application en mélangeant, un vernis acrylique du type vendu par la société "JACQUELIN", un vernis polyuréthanne du type vendu par la société "SERVAIS", un solvant ou diluant du type vendu par la société "SERVAIS" et un catalyseur constitué par un durcisseur.

L'application du vernis se fait de préférence par projection au pistolet.

Le processus d'attaque est très rapide, dès l'application du revêtement, l'attaque physico-chimique sur le méthacrylate de méthyle produit un effet opacifiant et granité.

Suivant l'effet recherché, on peut procéder à l'application de plusieurs couches successives, à la condition que du solvant soit encore présent à l'interface pour dissoudre le méthacrylate de méthyle et promouvoir d'autres sites de greffage.

La pièce est sèche rapidement, au bout de quelques minutes, mais il faut ensuite une dizaine de jours pour que le revêtement soit dur et résistant.

Le revêtement peut être additionné de pigments organiques qui assureront la coloration de la pièce en des endroits qui peuvent être choisis.

## Revendications

1. Procédé pour modifier les propriétés optiques d'un substrat en polyméthacrylate de méthyle, caractérisé en ce que l'on applique sur le substrat un revêtement constitué par un polymère susceptible de se greffer sur le substrat, un vernis acrylique, un catalyseur de greffage et un solvant agressif vis à vis du substrat, le catalyseur de greffage étant ajouté juste avant l'application du revêtement sur le substrat.

2. Procédé selon la revendication 1, caractérisé en ce que le polymère susceptible de se greffer est un polyuréthanne apporté sous forme de vernis.

3. Procédé selon la revendication 1 ou 2, caractérisé en ce que l'on réalise des couches successives de revêtement, chaque couche étant appliquée sur la couche précédente avant que son solvant ne soit totalement évaporé.

4. Procédé selon l'une quelconque des revendications précédentes, caractérisé en ce que l'on ajoute à la composition du revêtement des pigments organiques.

5. Procédé selon l'une quelconque des revendications précédentes, caractérisé en ce que l'on applique le revêtement à l'aide d'un pistolet.
